# EUROPÄISCHE PATENTANMELDUNG

(11) **EP 1 489 426 A2**
(43) Veröffentlichungstag der Anmeldung: **22.12.2004**
(21) Anmeldenummer: 04012313.5
(22) Anmeldetag: 25.05.2004
(51) Int. Cl.: G01N 35/10, B01L 3/02

(54) **Sytem zum Dosieren von Probenflüssigkeit**

(30) Priorität: 18.06.2003 DE 10327380
(71) Anmelder: EPPENDORF AG, 22339 Hamburg (DE)
(72) Erfinder: Treptow, Rainer Dipl.Ing, 22844 Norderstedt (DE)
(74) Vertreter: Patentanwälte Hauck, Graalfs, Wehnert, Döring, Siemons, Schildberg

(57) **Zusammenfassung**

System zum Dosieren von Probenflüssigkeit mit
- mindestens einem mit Probenflüssigkeit vorbefüllten Dosiermodul (1), das ein Modulgehäuse aufweist, in dem eine Verdrängerkammer mit einem nach außen führenden Dosierausgang angeordnet ist,
- mindestens einer Vorrichtung zum Lagern von Dosiermodulen (2),
- mindestens einer Dosiervorrichtung (3) mit einer Einrichtung zum Festlegen mindestens eines Dosiermoduls (1) an der Dosiervorrichtung (3) und zum Lösen des Dosiermoduls (1) von der Dosiervorrichtung (3) und einer Einrichtung zum Betätigen der Verdrängerkammer des an der Dosiervorrichtung (3) festgelegten Dosiermoduls (1),
- mindestens einer Vorrichtung zum Lagern von Substraten (4), auf die Probenflüssigkeit zu dosieren ist,
- einer Vorrichtung zum Verlagern (6) der Dosiervorrichtung (3) bezüglich der Vorrichtung zum Lagern von Dosiermodulen (2) und der Vorrichtung zum Lagern von Substraten (4) zum Austausch von Dosiermodulen (1) zwischen der Dosiervorrichtung und der Vorrichtung zum Lagern von Dosiermodulen (2) und zum Dosieren von Probenflüssigkeit auf Substrate (5) auf der Vorrichtung zum Lagern von Substraten (4) und
- einer mit den Einrichtungen zum Festlegen und Freigeben und Betätigen der Dosiervorrichtung (3) und der Verlagerungseinrichtung (6) verbundenen Steuerungsvorrichtung.

## Beschreibung

Die Erfindung bezieht sich auf ein System zum Dosieren von Probenflüssigkeit.

Bekannte Systeme zum Dosieren von Probenflüssigkeiten arbeiten mit Pipettenspitzen aus Kunststoff oder Stahl, die zumindest bei der Flüssigkeitsaufnahme in Gefäße mit Probenflüssigkeit eintauchen. Diese Systeme arbeiten manuell oder automatisch. Zur Meidung von Kontaminationen oder Verschleppungen müssen Kunststoffspitzen nach Gebrauch ausgetauscht und Stahlspitzen einer gründlichen Reinigung mit großem Bedarf an Spülflüssigkeit unterzogen werden. Dennoch können Kontaminationen und Verschleppungen nicht ausgeschlossen werden.

Die WO 99/10099 offenbart verschiedene Mikrodosiersysteme, die für Dosiervolumina im Bereich von wenigen Nanoliter bis einigen Mikroliter konzipiert sind und mit einem Freistrahldosierer und/oder einer Mikromembranpumpe arbeiten. Dabei handelt es sich um Direktverdrängersysteme, bei denen die zu dosierende Probenflüssigkeit direkt von einer Membran des Freistrahldosierers bzw. der Mikromembranpumpe verdrängt wird. Freistrahldosierer bzw. Mikromembranpumpe und ein Reservoir für eine zu dosierende Probenflüssigkeit sind in einem Dosiermodul zusammengefaßt, das auswechselbar mit einer Dosiervorrichtung verbindbar ist. Hierfür hat die Dosiervorrichtung am unteren Ende einen Aufnahmeschacht, in den das Dosiermodul eingesteckt ist. Das Dosiermodul wird von einem Haltemechanismus gehalten, der durch die axiale Einfügebewegung des Dosiermoduls in den Aufnahmeschacht ausgelöst wird. Die Dosiervorrichtung hat einen dem Aufnahmeschacht zugeordneten Aktor, der spaltfrei an der Membran des Dosiermoduls anliegt, um die Verdrängungseinrichtung zu betätigen. Durch Betätigen des Aktors kann bewirkt werden, daß das Dosiermodul Flüssigkeit aus einem Dosierausgang ausstößt. Offenbart sind Dosiermodule, die vor dem Einsetzen in die Dosiervorrichtung mit Probenflüssigkeit vorbefüllt sind. Diese sind Einmalteile, die nach Gebrauch weggeworfen werden können, oder mehrfach nutzbare Teile.

Die DE 101 33 062 A1 offenbart ein System, das eine geschützte Aufbewahrung von Dosiermodulen innerhalb und außerhalb von Dosiervorrichtungen ermöglicht und das Bestücken von Dosiervorrichtungen mit Dosiermodulen und das Entnehmen von Dosiermodulen aus Dosiervorrichtungen erleichtert. Das System umfaßt ein Dosiermodul, eine Dosiervorrichtung mit einer Aufnahme für das Dosiermodul und einen Behälter mit einer weiteren Aufnahme für das Dosiermodul. Das Verlagern der Dosiervorrichtung von Hand ist ungenau und kann zu Kontaminationen der Dosiermodule bzw. Gefäße führen, in die Probenflüssigkeit von Hand dosiert wird.

Davon ausgehend liegt der Erfindung die Aufgabe zugrunde, ein System zum Dosieren von Probenflüssigkeit auf beliebige Substrate zu schaffen, das das Kontaminations- und Verschleppungsrisiko weiter vermindert.

Die Aufgabe wird durch ein System mit den Merkmalen des Anspruches 1 gelöst. Vorteilhafte Ausgestaltungen des Systems sind in den Unteransprüchen angegeben.

Das erfindungsgemäße System zum Dosieren von Probenflüssigkeit hat
mindestens ein mit Probenflüssigkeit vorbefülltes Dosiermodul, das ein Modulgehäuse aufweist, in dem eine Verdrängerkammer mit einem nach außen führenden Dosierausgang angeordnet ist,
mindestens eine Vorrichtung zum Lagern von Dosiermodulen,
mindestens eine Dosiervorrichtung mit einer Einrichtung zum Festlegen mindestens eines Dosiermoduls an der Dosiervorrichtung und zum Lösen des Dosiermoduls von der Dosiervorrichtung und einer Einrichtung zum Betätigen der Verdrängerkammer des an der Dosiervorrichtung festgelegten Dosiermoduls,
mindestens eine Vorrichtung zum Lagern von Substraten, auf die Probenflüssigkeit zu dosieren ist,
eine Vorrichtung zum Verlagern der Dosiervorrichtung bezüglich der Vorrichtung zum Lagern von Dosiermodulen und der Vorrichtung zum Lagern von Substraten zum Austausch von Dosiermodulen zwischen der Dosiervorrichtung und der Vorrichtung zum Lagern von Dosiermodulen und zum Dosieren von Probenflüssigkeit auf Substrate auf der Vorrichtung zum Lagern von Substraten und
eine mit den Einrichtungen zum Festlegen und Freigeben und Betätigen der Dosiervorrichtung und der Vorrichtung zum Verlagern verbundenen Steuerungsvorrichtung.

Bei dem erfindungsgemäßen System wird die Dosiervorrichtung automatisch mit Dosiermodulen aus der Vorrichtung zum Lagern von Dosiermodulen bestückt bzw. werden automatisch Dosiermodule nach Gebrauch an eine Vorrichtung zum Lagern von Dosiermodulen abgegeben. Hierbei wird die relative Bewegung der Dosiervorrichtung und der Vorrichtung zum Lagern von Dosiermodulen von der Vorrichtung zum Verlagern bewirkt, wobei die Vorrichtung zum Verlagern von der Steuerungsvorrichtung gesteuert wird. Die Dosiervorrichtung wird bezüglich der Vorrichtung zum Verlagern in eine Position gebracht, in der die Dosiervorrichtung durch Steuerung der Einrichtung zum Festlegen oder der Einrichtung zum Lösen mit einem Dosiermodul aus der Einrichtung zum Lagern verbunden wird oder ein Dosiermodul an die Einrichtung zum Lagern abgibt. Ferner wird automatisch Probenflüssigkeit auf Substrate dosiert. Die Dosiervorrichtung wird bezüglich der Vorrichtung zum Lagern von Substraten verlagert, so daß das Dosiermodul mit seinem Dosierausgang auf die gewünschte Abgabestelle des Substrates ausgerichtet wird. Hierbei wird die relative Bewegung der Dosiervorrichtung und der Vorrichtung zum Lagern von Substraten von der Vorrichtung zum Verlagern bewirkt, die von der Steuerungsvorrichtung gesteuert wird. Die Dosierung wird von der Steuerungsvorrichtung durch Ansteuern der Einrichtung zum Betätigen der Verdrängerkammer automatisch gesteuert. Da vorbefüllte Dosiermodule verwendet werden, entfällt das Eintauchen von Dosiereinrichtungen in Probenflüssigkeit. Ferner ist die Probenflüssigkeit berührungslos im Freistrahl auf die Substrate dosierbar. Die Flüssigkeit ist auf Substrate mit kleinsten Abmessungen dosierbar, insbesondere in Aufnahmen hoch verdichteter Mikrotiterplatten oder auf Objektträger mit geringsten Abmessungen, auf die eine Vielzahl punktförmiger Flüssigkeitsproben aufzubringen ("spotten") sind. Durch das Vermeiden des Eintauchens und von Berührungen aufgrund der automatischen Abläufe werden Kontaminierungen und Verschleppungen vermieden und das aufwendige Spülen von Pipettenspitzen entfällt. Die Nachteile der manuellen Handhabung von Dosiermodulen für Volumina bis hinunter in den Nanoliterbereich entfallen.

Die Dosiermodule können unterschiedlich ausgestaltet sein. Insbesondere sind die Dosiermodule mit Reservoir, Mikromembranpumpe und/oder Freistrahldosierer gemäß WO 99/10099 A1 ausgeführt und/oder sind wie ein mikrofluidisches Speicher- und/oder Dosierbauteil gemäß EP 1 256 543 A2 ausgestaltet, deren Merkmale einzeln oder in beliebiger Kombination durch Bezugnahme auf vorstehende Dokumente in die vorliegende Anmeldung aufgenommen sind.

Verschiedene Ausgestaltungen der Vorrichtung zum Lagern von Dosiermodulen sind möglich. Gemäß einer Ausgestaltung hat die Vorrichtung zum Lagern von Dosiermodulen mindestens einen Behälter zum Aufbewahren von Dosiermodulen und/oder mindestens einen Handhabungsrahmen zum Handhaben von Behältern und/oder Dosiermodulen und/oder mindestens ein Tray zum Aufnehmen von Dosiermodulen und/oder Handhabungsrahmen und/oder Behältern. Der Behälter und/oder der Handhabungsrahmen und/oder das Tray sind insbesondere so ausgestaltet wie der Behälter und/oder das streifenförmige Oberteil (dieses entspricht dem Handhabungsrahmen) und/oder das Tray gemäß DE 101 33 062 A1, deren Merkmale einzeln oder in beliebiger Kombination durch Bezugnahme auf dieses Dokument in die vorliegende Anmeldung aufgenommen sind. Dies gilt insbesondere für die Verbindungstechnik zwischen Dosiermodul, Dosiervorrichtung, Behälter, Handhabungsrahmen und Tray sowie die Abdichtung des Dosiermoduls im Behälter.

Gemäß einer Ausgestaltung umfaßt die Vorrichtung zum Lagern von Dosiermodulen mindestens ein temperierbares Tray. Die Lagerung von vorbefüllten Dosiermodulen in einem temperierbaren Tray ermöglicht die Verlängerung der Lagerzeiten und/oder das Einstellen der Probenflüssigkeit auf eine bestimmte Reaktionstemperatur bereits vor der Dosierung. Gemäß einer Ausgestaltung ist das temperierbare Tray ein Kühlblock. Eine Ausgestaltung betrifft ein temperierbares Tray, das die Merkmale des als Einrichtung zum Temperieren ausgeführten Trays gemäß DE 101 33 062 A1 aufweist.

Gemäß einer Ausgestaltung umfaßt die Vorrichtung zum Lagern von Dosiermodulen mehrere Dosiermodule mit verschiedenen Probenflüssigkeiten. Die Dosiermodule haben Probenflüssigkeiten, die für verschiedene Applikationen bestimmt sind. Die solchermaßen ausgestaltete Vorrichtung zum Lagern von Dosiermodulen bildet eine "Bibliothek" mit applikationsspezifischen Probenflüssigkeiten, aus denen das System entsprechend der Anwendung auswählt. Dies wird von der Steuerungseinrichtung gesteuert.

Die Dosiervorrichtung kann in verschiedener Weise ausgestaltet sein. Gemäß einer Ausgestaltung weist sie die Merkmale des Betätigungsmoduls gemäß WO 99/10099 A1 auf, die einzeln oder in beliebiger Kombination durch Bezugnahme auf dieses Dokument in die vorliegende Anmeldung einbezogen sind. Gemäß einer Ausgestaltung weist die Dosiervorrichtung die Merkmale der Dosiervorrichtung gemäß DE 101 33 062 A1 auf, die einzeln oder in beliebiger Kombination durch Bezugnahme auf dieses Dokument in die vorliegende Anmeldung einbezogen sind.

Gemäß einer Ausgestaltung weist die Dosiervorrichtung die Merkmale der Dosiervorrichtung gemäß DE 100 39 735 C2 auf, die durch Bezugnahme auf dieses Dokument in die vorliegende Anmeldung einbezogen sind. Dies gilt ebenfalls für einzelne Merkmale der in Bezug genommenen Vorrichtungen und für beliebige Kombinationen dieser Merkmale. In diesem Dokument sind auch Einrichtungen zum Festlegen und Lösen und zum Betätigen beschrieben.

Gemäß einer Ausgestaltung sind mehrere parallele, einen konstanten Abstand voneinander aufweisende Dosiervorrichtungen und/oder ist mindestens eine Dosiervorrichtung, die mit mehreren Dosiermodulen in paralleler Ausrichtung mit einem konstanten Abstand voneinander verbindbar ist, vorhanden. Dieses System ermöglicht das automatische Dosieren mit mehreren parallel angeordneten, einen konstanten Abstand voneinander aufweisenden Dosiermodulen. Der Abstand entspricht z.B. dem Abstand der Aufnahme eines bestimmten Typs Mikrotiterplatten (z.B. mit 96, 384 oder 1536 Aufnahmen) oder dem Abstand von Punkten (die nicht zwangsläufig benachbart sein müssen) auf einem Objektträger. Hierdurch werden auch parallele Dosiervorgänge kontaminations- und verschleppungsfrei ermöglicht.

Die Substrate, auf die Probenflüssigkeit zu dosieren ist, sind insbesondere Gefäße, Gefäßketten, Mikrotiterplatten (z.B. mit 96, 384 oder 1536 Aufnahmen) und Membranmikrotiterplatten. Weitere Substrate sind Objektträger, insbesondere Objektträger aus Glas ("Slides") und Halbleitermaterial ("Chips"). Gemäß einer Ausgestaltung ist mindestens eine Vorrichtung zum Lagern von Substraten verschiedenen Typs vorhanden. Das System ermöglicht die gleichzeitige, zeitlich versetzte oder überlappende Bearbeitung von verschiedenen Substraten.

Gemäß einer Ausgestaltung umfaßt die Vorrichtung zum Lagern von Substraten einen festen oder einen verfahrbaren Tisch mit oder ohne Einrichtung zum Halten der Substrate. Gemäß einer Ausgestaltung umfaßt die Vorrichtung zum Lagern von Substraten eine Einrichtung zum Temperieren von Substraten, z.B. eine Einrichtung zum Kühlen. Dies ermöglicht es, die Substrate auf eine Temperatur zu bringen, die einer gewünschten Temperatur für die Probenflüssigkeit entspricht.

Gemäß einer Ausgestaltung umfaßt die Vorrichtung zum Verlagern eine mit der Steuerungsvorrichtung verbundene Einrichtung zum Festlegen der Dosiervorrichtung an der Vorrichtung zum Verlagern und zum Lösen der Dosiervorrichtung von der Vorrichtung zum Verlagern. Gemäß einer weiteren Ausgestaltung ist mindestens eine Vorrichtung zum Lagern von Dosiervorrichtungen vorhanden und ist die Einrichtung zum Festlegen und Lösen der Dosiervorrichtung mittels der Vorrichtung zum Verlagern bezüglich der Einrichtung zum Lagern von Dosiervorrichtungen verfahrbar, um Dosiervorrichtungen zwischen der Einrichtung zum Festlegen und Lösen von Dosiervorrichtungen und der Einrichtung zum Lagern von Dosiervorrichtungen auszutauschen. Dies ermöglicht einen automatischen Austausch der Dosiervorrichtung, beispielsweise um Dosiervorrichtungen für unterschiedlich ausgeführte Dosiermodule zu benutzen oder um funktionsunfähige Dosiervorrichtungen auszuwechseln.

Gemäß einer Ausgestaltung umfaßt die Vorrichtung zum Verlagern eine Einrichtung zum Antreiben der Verdrängerkammer und die Einrichtung zum Festlegen und Lösen der Dosiervorrichtung eine lösbare Kupplungseinrichtung zum Übertragen der Betriebsbewegung der Einrichtung zum Antreiben auf die Einrichtung zum Betätigen der Verdrängerkammer auf. Somit können unterschiedliche Dosiervorrichtungen mit derselben Einrichtung zum Antreiben arbeiten. Die Einrichtung zum Festlegen und Lösen der Dosiervorrichtung ist insbesondere ausgestaltet, wie der Werkzeughalter gemäß deutscher Patentanmeldung 102 47 731. Der mit der Einrichtung zum Festlegen und Lösen der Dosiervorrichtung verbindbare Teil der Dosiervorrichtung ist insbesondere so ausgestaltet, wie der mit dem Werkzeughalter verbindbare Teil der Dosiervorrichtung gemäß deutscher Patentanmeldung 102 47 731. Die betreffenden Merkmale sind durch Bezugnahme auf vorstehendes Dokument in die vorliegende Anmeldung aufgenommen. Dies gilt für einzelne Merkmale und beliebige Kombinationen derselben, die in dem Dokument beschrieben sind.

Die Einrichtung zum Verlagern kann ein beliebig ausgestalteter Handhabungsroboter sein.

Gemäß einer Ausgestaltung umfaßt die Vorrichtung zum Verlagern eine Einrichtung zum Verfahren der Dosiervorrichtung entlang einer, zwei oder drei Raumachsen und/oder um ein, zwei oder drei Drehachsen.

Gemäß einer Ausgestaltung umfaßt die Vorrichtung zum Verlagern eine Einrichtung zum Verlagern der Vorrichtung zum Lagern von Dosiermodulen und/oder der Vorrichtung zum Lagern von Substraten und/oder der Vorrichtung zum Lagern von Dosiervorrichtungen entlang ein, zwei oder drei Raumachsen und/oder um ein, zwei oder drei Drehachsen.

Gemäß einer Ausgestaltung steuert die Steuerungseinrichtung gleichzeitig eine Verlagerung der Dosiervorrichtung bezüglich der Vorrichtung zum Lagern von Substraten mittels der Vorrichtung zum Verlagern und das Dosieren von Probenflüssigkeit auf Substrate. Hierdurch ist Probenflüssigkeit während einer Verlagerung der Substrate bezüglich der Dosiervorrichtung auf die Substrate dosierbar, d.h. eine Dosierung "on the flight".

Es versteht sich, daß die Dosiervorrichtung und die Einrichtung zum Verlagern mit geeigneten Aktoren und/oder motorischen Antrieben ausgestattet ist, um Dosiermodule festzulegen, zu lösen, die Verdrängerkammer zu betätigen und die Verlagerung herbeizuführen.

Gemäß einer Ausgestaltung ist das System in einen Dosierautomaten oder in einen Laborautomaten ("Bearbeitungsstation" oder "Werkstation") integriert.

Die Erfindung wird nachfolgend anhand der anliegenden Zeichnungen von Ausführungsbeispielen näher erläutert. In den Zeichnungen zeigen:
- Fig. 1: ein grobschematisches Blockbild eines erfindungsgemäßen Systems;
- Fig. 2: Dosiervorrichtung, Dosiermodul, Behälter, Handhabungsrahmen und Kühlblock des Systems in einem perspektivischen Sprengbild;
- Fig.: 3 dieselben Komponenten des Systems ineinandergefügt in derselben Perspektivansicht.

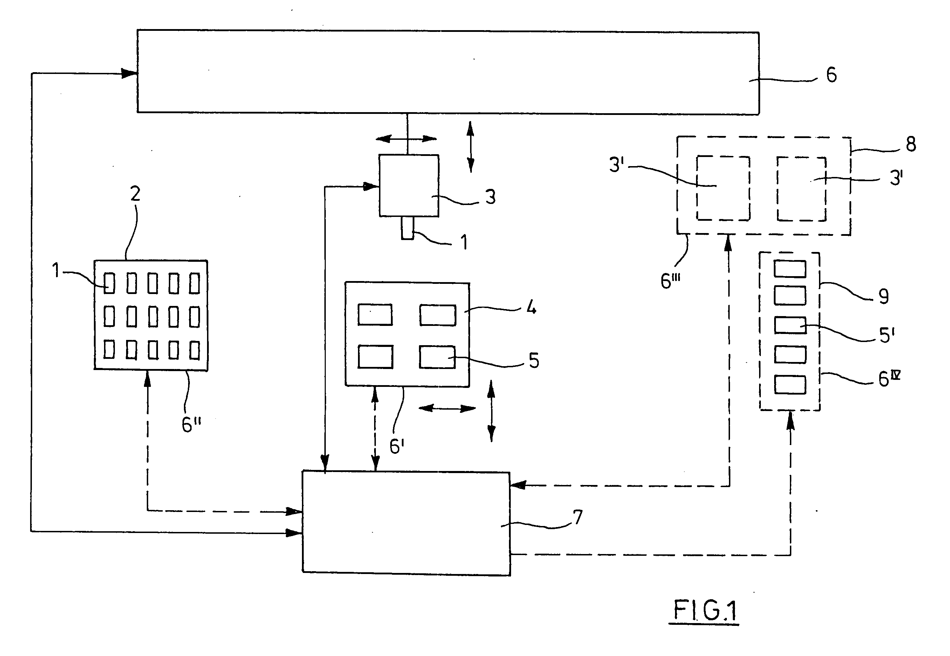

Gemäß Fig. 1 umfaßt das erfindungsgemäße System eine Vielzahl Dosiermodule 1, die in einer Vorrichtung zum Lagern von Dosiermodulen 2 gelagert sind. Die Einzelheiten des Dosiermoduls 1 sind in der Zeichnung nicht gezeigt. Es umfaßt ein Modulgehäuse, in dem eine Verdrängerkammer mit einem nach außen führenden Dosierausgang angeordnet ist.

Des weiteren ist eine Dosiervorrichtung 3 vorhanden, die mit einem Dosiermodul 1 lösbar verbunden ist. Die Dosiervorrichtung 3 umfaßt nicht gezeigte Einrichtungen zum Festlegen des Dosiermoduls 1 an der Dosiervorrichtung 3 und zum Lösen des Dosiermoduls 1 von der Dosiervorrichtung 3. Ferner umfaßt sie eine nicht gezeigte Einrichtung zum Betätigen der Verdrängerkammer des an der Dosiervorrichtung 3 festgelegten Dosiermoduls 1.

Auf einer Vorrichtung zum Lagern von Substraten 4 sind mehrere Substrate 5 angeordnet.

Ferner ist eine Vorrichtung zum Verlagern der Dosiervorrichtung 6 vorhanden. Mit der Vorrichtung zum Verlagern 6 ist die Dosiervorrichtung 3 in einer Ebene parallel zu den Substraten 5 auf der Vorrichtung zum Lagern von Substraten 4 verfahrbar.

Ferner ist eine z.B. elektronische Steuerungsvorrichtung 7 vorhanden, die mit der Dosiervorrichtung 3 und der Vorrichtung zum Verlagern 6 verbunden ist. Die Steuerungsvorrichtung 7 steuert die Festlegung und das Lösen von Dosiermodulen 1 an bzw. von der Dosiervorrichtung 3 und die Bewegungen der Dosiervorrichtung 3. Mittels nicht gezeigter Ein- und Ausgabeeinrichtungen, die mit der Steuerungseinrichtung 7 verbunden sind, kann der Anwender das System steuern.

Die Steuerung der Bewegung der Dosiervorrichtung 3 und ihre Einrichtungen zum Festlegen und Lösen des Dosiermoduls 1 können Dosiermodule 1 aus der Vorrichtung zum Lagern 2 entnommen oder dieser zugeführt werden. Durch Steuern der Bewegung der Dosiervorrichtung 3 und der Einrichtung zum Betätigen der Verdrängerkammer ist Probenflüssigkeit aus dem vorbefüllten Dosiermodul 1 auf Substrate 5 auf der Vorrichtung zum Lagern 4 dosierbar.

Varianten des Systems sind durch gestrichelte Linien und durch angestrichene Bezugsziffern bezeichnet.

Gemäß einer Variante weist die Vorrichtung zum Verlagern 6 eine Einrichtung zum Verlagern 6' auf, mittels der die Vorrichtung zum Lagern von Substraten 4 verlagerbar ist. Die Einrichtung zum Verlagern 6' wird ebenfalls von der Steuerungsvorrichtung 7 gesteuert. Das Dosieren kann unter Verlagerung der Einrichtung zum Lagern 4 erfolgen.

Gemäß einer weiteren Variante weist die Vorrichtung zum Verlagern 6 eine weitere Einrichtung zum Verlagern 6" auf, die der Vorrichtung zum Lagern von Dosiermodulen 2 zugeordnet ist. Die Einrichtung zum Verlagern 6" kann Dosiermodule 1 in Positionen verlagern, in denen sie von der Dosiervorrichtung 3 leicht gegriffen werden können. Auch dies wird von der Steuerungsvorrichtung 7 gesteuert.

In einer Vorrichtung zum Lagern von Dosiervorrichtungen 8 sind weitere Dosiervorrichtungen 3' gelagert. Mittels der Einrichtung zum Verfahren 6 sind Dosiervorrichtungen 3 in die Vorrichtung zum Lagern von Dosiervorrichtung 8 einsetzbar bzw. Dosiervorrichtungen 3' daraus entnehmbar. Auch können in der Vorrichtung zum Lagern von Dosiervorrichtungen 8 andere Werkzeuge enthalten sein, z.B. ein Greifwerkzeug, das im Bedarfsfalle mit der Vorrichtung zum Verlagern 6 anstelle der Dosiervorrichtung 3 verbunden wird.

In einem Magazin 9 sind weitere Substrate 5' enthalten. Die Substrate 5' können gegebenenfalls auf die Vorrichtung zum Lagern von Substraten 4 übertragen werden. Dies kann beispielsweise mit Hilfe eines Greifwerkzeuges geschehen, das in der Vorrichtung zum Lagern von Dosiervorrichtungen 8 gelagert ist.

Der Vorrichtung zum Lagern von Dosiervorrichtungen 8 und dem Magazin 9 können weitere Einrichtungen zum Verlagern 6"', 6^{IV} zugeordnet sein, die die Dosiervorrichtungen 3' bzw. Substrate 5' in geeigneten Entnahmepositionen bereitstellen oder aus geeigneten Abgabepositionen abziehen.

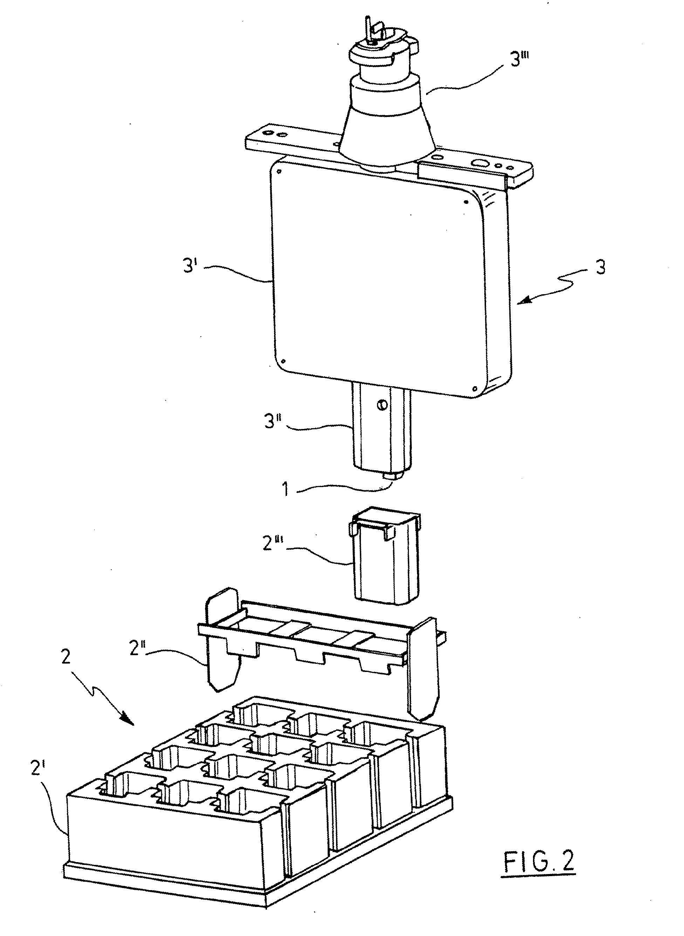

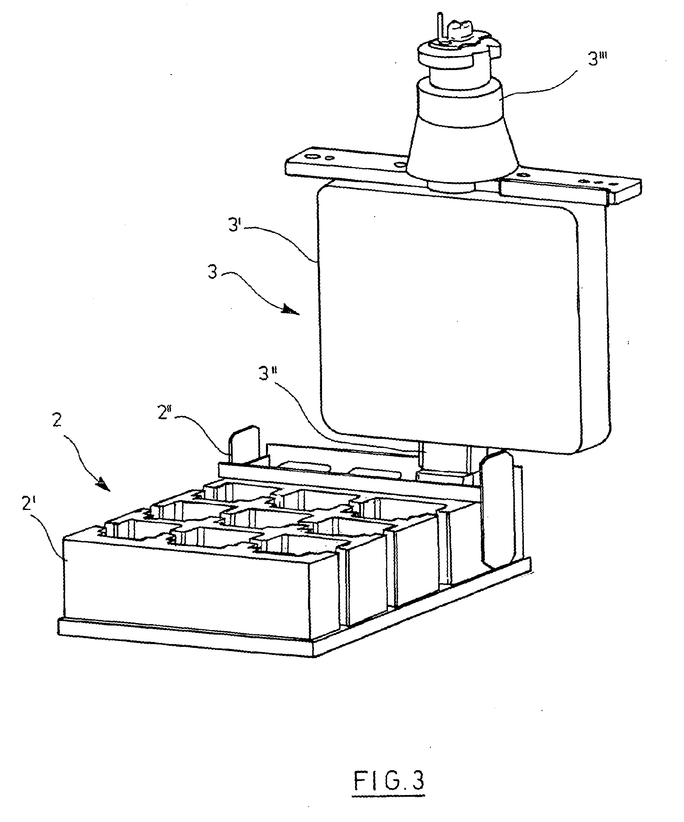

Gemäß Fig. 2 und 3 umfaßt die Vorrichtung zum Lagern von Dosiermodulen 2 ein Tray 2', einen oder mehrere Handhabungsrahmen 2" und einen oder mehrere Behälter 2"'. Diese Ausführung entspricht dem Ausführungsbeispiel von Fig. 8 bis 15 der deutschen Patentanmeldung 101 33 062.

Das Dosierwerkzeug 3 hat ein Gehäuse 3' mit einem unteren Endabschnitt 3", in dem Dosiermodule 1 untergebracht sind. Die Ausgestaltung des Dosiermoduls 1 und des unteren Endabschnittes 3" entsprechen den Ausgestaltungen des Dosiermoduls und des unteren Endabschnittes der Dosiervorrichtung von Fig. 1 und 2 der vorbezeichneten Patentanmeldung.

Oben ist das Gehäuse 3 mit einem Kupplungsbereich 3"' für die Verbindung mit der Vorrichtung zum Verlagern 6 verbindbar. Die Ausgestaltung dieses Befestigungsbereiches, der auch eine Antriebsbewegung überträgt, entspricht der des Oberteils des Dosierwerkzeuges der Fig. 4 bis 6 der deutschen Patentanmeldung 102 47 731.

Durch Verlagern des Dosierwerkzeuges 3 bezüglich der Vorrichtung zum Lagern 2 sind Dosiermodule 1 in die Vorrichtung zum Lagern 2 einsetzbar bzw. aus dieser entnehmbar, wie in den Fig. 1 und 2 gezeigt.

## Patentansprüche

1. System zum Dosieren von Probenflüssigkeit mit
- mindestens einem mit Probenflüssigkeit vorbefüllten Dosiermodul (1), das ein Modulgehäuse aufweist, in dem eine Verdrängerkammer mit einem nach außen führenden Dosierausgang angeordnet ist,
- mindestens einer Vorrichtung zum Lagern von Dosiermodulen (2),
- mindestens einer Dosiervorrichtung (3) mit einer Einrichtung zum Festlegen mindestens eines Dosiermoduls (1) an der Dosiervorrichtung (3) und zum Lösen des Dosiermoduls (1) von der Dosiervorrichtung (3) und einer Einrichtung zum Betätigen der Verdrängerkammer des an der Dosiervorrichtung (3) festgelegten Dosiermoduls (1),
- mindestens einer Vorrichtung zum Lagern von Substraten (4), auf die Probenflüssigkeit zu dosieren ist,
- einer Vorrichtung zum Verlagern (6) der Dosiervorrichtung (3) bezüglich der Vorrichtung zum Lagern von Dosiermodulen (2) und der Vorrichtung zum Lagern von Substraten (4) zum Austausch von Dosiermodulen (1) zwischen der Dosiervorrichtung (3) und der Vorrichtung zum Lagern von Dosiermodulen (2) und zum Dosieren von Probenflüssigkeit auf Substrate (5) auf der Vorrichtung zum Lagern von Substraten (4) und
- einer mit den Einrichtungen zum Festlegen und Freigeben und Betätigen der Dosiervorrichtung (3) und der Verlagerungseinrichtung (6) verbundenen Steuerungsvorrichtung.

2. System nach Anspruch 1, bei dem die Vorrichtung zum Lagern von Dosiermodulen (2) mindestens einen Behälter (2"') zum Aufbewahren von Dosiermodulen (1) und/oder mindestens einen Handhabungsrahmen (2") zum Handhaben von Behältern (2'") und/oder Dosiermodulen (1) und/oder mindestens ein Tray (2') zum Aufnehmen von Dosiermodulen (1) und/oder Handhabungsrahmen (2") und/oder Behältern (2'") umfaßt.

3. System nach Anspruch 2, bei dem die Vorrichtung zum Lagern von Dosiermodulen (2) mindestens ein temperierbares Tray (2') umfaßt.

4. System nach Anspruch 3, bei dem das temperierbare Tray (2') ein Kühlblock ist.

5. System nach einem der Ansprüche 1 bis 4, bei dem die Vorrichtung zum Lagern von Dosiermodulen (2) Dosiermodule (1) mit verschiedenen Probenflüssigkeiten umfaßt.

6. System nach einem der Ansprüche 1 bis 5 mit mehreren parallelen, einen konstanten Abstand voneinander aufweisenden Dosiervorrichtungen (3) und/oder mindestens einer Dosiervorrichtung (3), die mit mehreren Dosiermodulen (1) in paralleler Ausrichtung mit einem konstanten Abstand voneinander verbindbar ist.

7. System nach einem der Ansprüche 1 bis 6, bei dem mindestens eine Vorrichtung zum Lagern von Substraten (4) mit Substraten (5) verschiedenen Typs vorhanden ist.

8. System nach einem der Ansprüche 1 bis 7, bei dem die Vorrichtung zum Lagern von Substraten (4) einen festen oder beweglichen Tisch mit oder ohne Einrichtungen zum Halten von Substraten (5) umfaßt.

9. System nach einem der Ansprüche 1 bis 8, bei dem die Vorrichtung zum Lagern von Substraten (4) eine Einrichtung zum Temperieren von Substraten (5) umfaßt.

10. System nach einem der Ansprüche 1 bis 9, bei dem die Vorrichtung zum Verlagern (6) eine mit der Steuerungsvorrichtung (7) verbundene Einrichtung zum Festlegen der Dosiervorrichtung (3) an der Vorrichtung zum Verlagern (6) und zum Lösen der Dosiervorrichtung von der Vorrichtung zum Verlagern (6) aufweist.

11. System nach Anspruch 10, mit mindestens einer Vorrichtung zum Lagern von Dosiervorrichtungen (8), wobei die Einrichtung zum Festlegen und Lösen der Dosiervorrichtung (3) mittels der Vorrichtung zum Verlagern (6) bezüglich der Vorrichtung zum Lagern von Dosiervorrichtungen (8) verfahrbar ist, um Dosiervorrichtungen (3) zwischen der Einrichtung zum Festlegen und Lösen von Dosiervorrichtungen (3) und der Vorrichtung zum Lagern von Dosiervorrichtungen (8) auszutauschen.

12. System nach Anspruch 10 oder 11, bei dem die Vorrichtung zum Verlagern (6) eine Einrichtung zum Antreiben der Verdrängerkammer und die Einrichtung zum Festlegen und Lösen der Vorrichtung zum Verlagern (6) eine lösbare Kupplungseinrichtung zum Übertragen der Antriebsbewegung der Einrichtung zum Antreiben auf die Einrichtung zum Betätigen der Verdrängerkammer aufweist.

13. System nach einem der Ansprüche 1 bis 12, bei dem die Vorrichtung zum Verlagern (6) eine Einrichtung zum Verfahren der Dosiervorrichtung (3) entlang einer, zwei oder drei Raumachsen und/oder um ein, zwei oder drei Drehachsen umfaßt.

14. System nach einem der Ansprüche 1 bis 13, bei dem die Vorrichtung zum Verlagern (6) eine Einrichtung zum Verlagern der Vorrichtung zum Lagern von Dosiermodulen (2) und/oder der Vorrichtung zum Lagern von Substraten (4) und/oder der Vorrichtung zum Lagern von Dosiervorrichtungen (8) entlang ein, zwei oder drei Raumachsen und/oder um ein, zwei oder drei Drehachsen umfaßt.

15. System nach einem der Ansprüche 1 bis 10, bei dem die Steuerungsvorrichtung gleichzeitig eine Verlagerung der Dosiervorrichtung (3) bezüglich der Vorrichtung zum Lagern von Substraten (4) mittels der Vorrichtung zum Verlagern (6) und das Dosieren von Probenflüssigkeit auf Substrate (5) mittels der Einrichtung zum Betätigen der Verdrängerkammer steuert.
